# EUROPEAN PATENT APPLICATION

(11) **EP 0 838 432 A1**
(43) Date of publication of application: **29.04.1998**
(21) Application number: 97919721.7
(22) Date of filing: 28.04.1997
(51) Int. Cl.: C02F 1/32, B01J 35/02

(54) **SINK-AND-FLOAT BODY FOR PURIFICATION AND PURIFICATOR**

(30) Priority: 30.04.1996 JP 130517/96
(71) Applicant: Tao Inc., Shibuya-ku, Tokyo 151 (JP)
(72) Inventor: OGATA, Shiro, Kawasaki-shi, Kanagawa 215 (JP)
(74) Representative: Billington, Lawrence Emlyn
(86) International application number: JP9701478
(87) International publication number: WO9741069

(57) **Abstract**

A floating/sinking body for purification, capable of efficiently utilizing photocatalytic functional layers, easily removing decomposition products and further capable of maintaining photocatalytic function even during electricity failure or after turning off the light, and a purification tank efficiently using the floating/sinking body. Each floating/sinking body (1) is a small solid body having a relatively small specific gravity, each having a photocatalytic functional layer (14) of optical semiconductor formed on the surface of a base (12) thereof. Windows (15) with no photocatalytic functional layer (14) are formed in the surface of the base (12), to permit a light storage-type ultraviolet radiating material mixed in the base (12) to readily receive ultraviolet rays from outside. The purification tank (3) has a circulation device (4) for circulating fluid and the floating/sinking bodies (5).

## Description

### Technical Field

The present invention relates to a floating/sinking body for purification by removing organic compounds in a fluid such as sewage or exhaust and by a sterilizing function, and also relates to a purifying apparatus using the floating/sinking body.

### Background Art

There is a well-known purification technique utilizing photocatalytic function in which a fluid containing noxious organic compounds or bacteria are brought into contact with optical semiconductor excited by ultraviolet rays to decompose the organic compounds by oxidation/reduction or to destroy the bacteria, thereby purifying the fluid.

In Unexamined Japanese Patent Publications No. 4-61933, No. 6-285458 and No. 7-108138, a photocatalytic element or module is arranged in a flow passage for a fluid, and optical semiconductor is retained on the surface of the element or module which comes into contact with the fluid so that the optical semiconductor serves as a photocatalytic functional layer.

According to such a technique, however, the photocatalytic functional layer remains at a fixed position, and thus organic compounds in the fluid come only transiently into contact with the photocatalytic functional layer as the fluid moves, so that the efficiency of decomposing organic compounds is not high enough. Further, maintenance for refreshing the photocatalytic functional layer, such as cleaning or replacement of the photocatalytic element or module, is not easy and it is also not easy to reinstall an ultraviolet radiation source for supplying the photocatalytic functional layer with ultraviolet rays.

Examined Japanese Patent Publication No. 5-50294 discloses a structure in which a base retaining optical semiconductor thereon is filled in a glass tube and a fluid is made to flow while the base is irradiated with ultraviolet rays. With this structure, presumably it is relatively easy to handle, clean and replace the base retaining optical semiconductor thereon as the maintenance operation for renewing the photocatalytic functional layer. Nevertheless, in this case too, the base which retains optical semiconductor thereon remains fixed and thus contacts only transiently with the fluid.

In Examined Japanese Patent Publication No. 2-55117, granular photocatalyst 3 is kept in a floating/sinking condition in a reaction section A of the apparatus. With this arrangement, a high efficiency may be attained in both the photocatalyst with ultraviolet rays and also the bringing about the contact between the photocatalyst and the fluid. However, the gist of the invention disclosed in this publication resides in the use of the photocatalytic function of the optical semiconductor in combination with peroxide (hydrogen peroxide), and no detailed explanation is given concerning the structure of the granular photocatalyst.

In general, conventional fluid purifying apparatus have a closed interior, and, therefore, sunlight cannot be utilized as a source of ultraviolet rays to be supplied to the optical semiconductor which is used inside the apparatus. For this reason, a fluorescent lamp or xenon lamp arranged within the tank is used as an ultraviolet radiation source, but none of the aforementioned publications make mention of the situation where the supply of ultraviolet rays from the ultraviolet radiation source is stopped due to electricity failure or lights-out.

Also, many other purifying apparatus utilizing the photocatalytic function of optical semiconductor have been publicized, but none of them teach an efficient way of supplying the optical semiconductor with ultraviolet rays which are indispensable to activation of the optical semiconductor.

### Disclosure of Invention

An object of the present invention is to provide a floating/sinking body for purification, capable of efficiently utilizing a photocatalytic functional layer formed by optical semiconductor and easily removing decomposition products for re-use, and further capable of maintaining a photocatalytic function even during electricity failure or after tuning off the light; and to provide a purification tank for efficiently utilizing the floating/sinking body. The purification tank is capable of efficiently supplying ultraviolet rays to the floating/sinking bodies put into the tank and suspended in the tank to circulate therein.

The floating/sinking body comprises a solid base made of an ultraviolet ray transmitting material to sink and float in the fluid, and a photocatalytic functional layer formed on an outer surface of the base. The base may have a spherical shape with a through hole and a short tubular shape, etc.

The base may be made of an ultraviolet ray transmitting material with an ultraviolet radiating material of a light storage type and/or an ultraviolet radiating material of a spontaneous emission type.

For incorporating the light storage-type or spontaneous emission-type ultraviolet radiating material in the base, the ultraviolet radiating material may be mixed in the ultraviolet ray transmitting material so that the mixture is formed into shape, a hollow base may be used so that the ultraviolet radiating material is filled in the hollow of the base in airtight and watertight fashion, or a sheet having a layer of the light storage-type ultraviolet radiating material thereon may be affixed to an inner surface of the base.

The light storage-type ultraviolet radiating material (light storage-type luminous ceramic) is a material which takes in energy from outside and emits light by releasing the energy stored therein, and has an emission spectrum including an ultraviolet region.

The spontaneous emission-type ultraviolet radiating material (spontaneous emission-type luminous ceramic) is a material which emits light by itself by consuming its internal energy, and has an emission spectrum including an ultraviolet region.

An ultraviolet radiating device of an external-excitation type is an ultraviolet radiation source such as a fluorescent lamp which radiates ultraviolet rays only while receiving energy, such as electric power, from outside.

Alternatively, the base may be constituted by a plurality of separate parts to be joined together, such as a combination of a disk-like member and a spherical member.

In the case where the base contains the light storage-type ultraviolet radiating material therein, a window, not having the photocatalytic functional layer is formed in part of the surface of the base. External ultraviolet rays are introduced through the window into the interior of the base, so that sufficient light emission energy can be stored in the light storage-type ultraviolet radiating material. The window may be formed by subjecting a masked base to photocatalytic material spraying or dipping so that a mosaic-like photocatalytic functional layer may be formed, or by partly cutting or grooving the base after the photocatalytic functional layer is formed over the entire surface of the base.

Where the base is in the form of a sphere or a short tube having a through hole therein, the photocatalytic functional layer is formed only on the spherical surface of the sphere or on the outer peripheral surface of the tube so that the through hole may serve as windows, and ultraviolet rays are introduced to the inner surface of the base through the windows.

Alternatively, to form the window, a first base member having the photocatalytic functional layer on the surface thereof and a second base member containing the light storage-type ultraviolet radiating material therein may be joined together so that the second base member is not entirely covered with the first base member. That is, the portion of the second base member which is not covered with the first base member serves as the window, and ultraviolet rays are introduced via this portion and are absorbed in the light storage-type ultraviolet radiating material of the second base member.

The floating/sinking bodies for purification obtained in the above manner are used for a purifying apparatus in a sewage treatment plant, a purifying apparatus in a service water supply plant, a purifying apparatus in an exhaust purification plant, or a purifying apparatus arranged in a hot water circulation path of unit bath equipment.

The purifying apparatus comprises a fluid tank containing a fluid to be purified, floating/sinking bodies movable in the fluid in the fluid tank, an ultraviolet radiation source for radiating ultraviolet rays to the floating/sinking bodies, and a circulation device for circulating the floating/sinking bodies moving up and down to expose the floating/sinking bodies to the ultraviolet rays from the ultraviolet radiation source.

The fluid tank has a capacity large enough to permit the fluid to be agitated together with the floating/sinking bodies and has such a shape as to allow fluent circulation of the fluid and the floating/sinking bodies.

Usually, the ultraviolet radiation source is implemented by an ultraviolet radiating device of an external-excitation type such as a fluorescent lamp, a xenon lamp or the like, but may be a lighting window provided at an upper portion of the fluid tank, or a device for introducing the sunlight into the tank by using a reflecting plate or a bundle of optical fibers. In the case of using a fluorescent lamp or the like, it is enclosed in a watertight cover when to be arranged in the fluid tank or is placed in an upper space of the tank.

Further, an impeller type or helical screw-type circulation device or a jet type circulation device may be arranged inside the fluid tank. The circulation device circulates the fluid and the floating/sinking bodies in the tank while agitating the same, to thereby actively bring the fluid into contact with the photocatalytic functional layers of the bodies and also to facilitate the supply of ultraviolet rays to the photocatalytic functional layers.

In the case where the ultraviolet radiation source is arranged in the upper space of the fluid tank, the circulating device may have a structure in which the floating/sinking bodies for purification are raised at an upper portion of the fluid tank up to a level above the surface of the fluid so that the photocatalytic functional layers of the floating/sinking bodies may directly receive ultraviolet rays from the ultraviolet radiation source. With this structure, the ultraviolet rays of a higher intensity can be applied to the photocatalytic functional layers and thus enhanced photocatalytic function is available in comparison with the structure in which the ultraviolet radiation source is arranged in the fluid in the fluid tank.

The foregoing description is made on examples of the floating/sinking body for purification which is made of a single member. Alternatively, a plurality of members joined together into a ball shape, for example, may be used as the floating/sinking body for purification.

Further, in addition to the floating/sinking bodies for purification having the photocatalytic function, there are provided floating/sinking bodies for supplying ultraviolet rays, which contains the light storage-type or spontaneous emission-type ultraviolet radiating material for an ultraviolet supplying function only, and the ultraviolet-ray supply bodies are circulated together with the purification bodies in the fluid tank of the purifying apparatus so as to assist the supply of ultraviolet rays. In this case, the floating/sinking bodies for purification may have the photocatalytic function only. As the ultraviolet-ray supply bodies circulate together with the bodies for purification in the fluid tank, the bodies come into contact with one another to clean the surfaces thereof by such mutual contact.

### Brief Description of Drawings

FIGS. 1a and 1b are a perspective view and a sectional view, respectively, of a floating/sinking body for purification according to an embodiment of the present invention;
FIGS. 2a and 2b are a perspective view and a sectional view, respectively, of a floating/sinking body for purification according to another embodiment of the invention;
FIGS. 3a and 3b are a perspective view and a sectional view, respectively, of a floating/sinking body for purification according to still another embodiment of the invention;
FIGS. 4a and 4b are a perspective view and a sectional view, respectively, of a floating/sinking body for purification according to yet another embodiment of the invention;
FIGS. 5a and 5b are a perspective view and a sectional view, respectively, of a floating/sinking body for purification according to further another embodiment of the invention;
FIGS. 6a and 6b are a perspective view and a sectional view, respectively, of a floating/sinking body for purification according to still another embodiment of the invention;
FIG. 7 is a perspective view showing another example of pattern of a photocatalytic functional layer on the floating/sinking body for purification;
FIG. 8 is a perspective view of a floating/sinking body for purification according to further another embodiment of the invention;
FIG. 9 is a partially cutaway plan view of a purifying apparatus according to an embodiment of the present invention;
FIG. 10 is a sectional front view of the purifying apparatus shown in FIG. 9;
FIG. 11 is a sectional front view showing a purifying apparatus according to another embodiment of the invention;
FIG. 12 is a sectional plan view of a purifying apparatus according to still another embodiment of the invention; and
FIG. 13 is a sectional front view of the purifying apparatus shown in FIG. 12.

### Best Mode of Carrying out the Invention

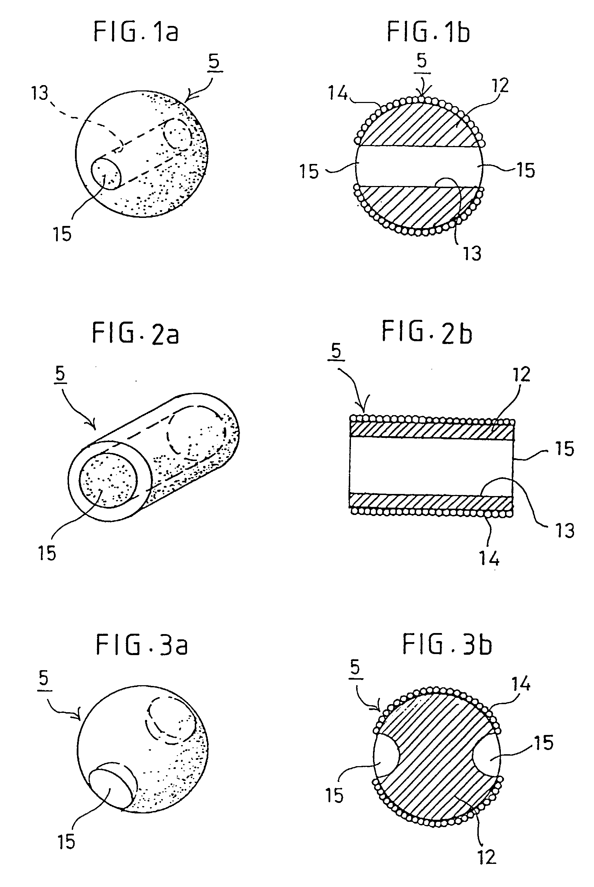

A base 12 of a floating/sinking body 5 shown in FIGS. 1a and 1b is spherical in shape and has a through hole 13 therein. Particles of optical semiconductor are affixed to the outer surface of the base 12, thus forming a photocatalytic functional layer 14. The photocatalytic functional layer 14 is not formed on the inner surface of the through hole 13. When the purification ball 5 is viewed as a whole, the openings at opposite ends, or right and left ends, of the through hole 13 serve as windows 15 of the area where the photocatalytic functional layer 14 does not exist.

The base 12 is formed by particles of a transparent polycarbonate resin material compressed into shape with heat applied thereto. In this embodiment, since air is enclosed in the interior of the base, the base as a whole has a specific gravity of about 1.1.

The diameter of the floating/sinking body 5 is usually about 10 to 50 mm, but may be 1 mm or less or may be more than 100 mm depending on the intended use. The floating/sinking body needs to smoothly flow within a purification tank, and therefore, the specific gravity of the body as a whole is adjusted approximately to 0.1 to 2.0 in accordance with the specific gravity and viscosity of a fluid to be purified. In the case where the base is made of a heavy material such as glass, the base may have a hollow structure.

It is necessary that the material of the base should have a high transmissivity with respect to ultraviolet radiation, so that glass, polypropylene resin, ABS resin, polyacrylate resin, polycarbonate resin, so-called engineering plastics (polytetrafluoroethylene resin, polyether ketone resin), etc. are used. If necessary, the base may be made of a material obtained by mixing glass fibers in a polyester resin, thereby raising the thermal deformation temperature of the material.

To form the photocatalytic functional layer 14, first, the surface of the base 12 is sprayed with silica sol, and after the base is dried and heated, the base is carefully sprayed with optical semiconductor so that the optical semiconductor may not adhere to the inner surface of the through hole 13, followed by drying. Subsequently, the base is heated at a temperature of 150°C to fix the optical semiconductor particles on the surface of the base.

The optical semiconductor to be used may be TiO₂, ZnO, SrTiO₃, CdS, CdO, CaP, InP, In₂O₃, CaAs, BaTiO₃, K₂NbO₃, Fe₂O₃, Ta₂O₃, WO₃SaO₂Bi₂O₃, NiO, Cu₂O, SiC, SiO₂, MoS₂, MoS₃, InPb, RuO₂, CeO₂, etc., and the most often used optical semiconductor is titanium oxide (TiO₂).

Titanium oxide has excellent photocatalytic function and is also stable. Commercially available titanium oxide is in the form of powder or sol: for titanium oxide powder, "ST-01" (trade name by Ishihara Sangyo Kaisha, Ltd.) having a particle size of 0.01 to 0.007 µm may be used, and, for titanium oxide sol, "TO SOL" (trade name by Tanaka Transfer Printing Co., Ltd.) or "STS-01" (trade name by Ishihara Sangyo Kaisha, Ltd.) may be used.

The above optical semiconductors absorb ultraviolet rays falling within a wavelength range of 50 to 400 nm which is slightly shorter than those of visible rays. Some optical semiconductors, however, have absorption wavelengths falling within the range of visible rays. For example, SiC has an absorption wavelength of 413 nm, CdS has an absorption wavelength of 496 nm, and Fe₂O₃ has an absorption wavelength of 539 nm.

The wavelength of ultraviolet radiation with which an optical semiconductor is excited varies depending on the kind of the optical semiconductor used, and can be adjusted by varying the combination of optical semiconductors to be mixed.

Also available are a mixture of a plurality of optical semiconductors and a composite optical semiconductor which is admixed with an inorganic pigment or a metal so that an absorption wavelength region thereof may be extended to the range of visible rays; therefore, a suitable optical semiconductor can be selected, along with an ultraviolet radiation source, in accordance with the intended use.

As additives for providing a complementary function such as mildew resistance, sterilization, etc., Pt, Ag, Rh, RuO₂, Nb, Cu, Sn, NiO and the like may be used.

To fix the optical semiconductor on the surface of the base and thereby form a photocatalytic functional layer, various methods are conventionally known in the art. In general, the surface of the base is coated with a sol of optical semiconductor particles by dipping or spraying, then dried, and baked at a temperature of about 150 to 400°C for fixing. The photocatalytic functional layer formed in this manner may have various structures. For example, the optical semiconductor particles may be fixed directly on the surface of the base. Alternatively, particles of frit or glass may be first affixed to the surface of the base to form a layer with fine irregularities or porosity on the surface of the base, followed by fixing of optical semiconductor particles on the surface of such layer.

In the case of the base made of glass or ceramic material, the fixing may be performed at a relatively high temperature, but where the base is made of a general-purpose resin such as polypropylene resin, ABS resin, polyacrylate resin or polycarbonate resin, the fixing is preferably performed by heating at 100°C or thereabouts. For an engineering plastic such as polytetrafluoroethylene resin or polyether ketone resin, on the other hand, fluorocarbon polymer or silicone resin polymer is used as a binder, and the fixing can be performed by heating at 200°C or thereabouts.

In the case of using a polymeric organic resin as the base, the surface of the resin is previously blocked to the photocatalytic functional layer to be formed, by applying silica sol, for example, before the optical semiconductor as photocatalytic semiconductor is applied on the base so that the base itself will not be decomposed due to the photocatalytic function.

The base 12 may alternatively be obtained by mixing a light storage-type ultraviolet radiating material or a spontaneous emission-type ultraviolet radiating material in a material capable of transmitting ultraviolet rays therethrough. The light storage-type or spontaneous emission-type ultraviolet radiating material radiates ultraviolet rays by itself by consuming the energy stored or generated therein, so that the photocatalytic functional layer on the surface of the base 12 is excited also from inside of the base.

The light storage-type ultraviolet radiating material contains strontium aluminate (SrAl₂O₄), being a main component, high-purity alumina, strontium carbonate, europium, dysprosium, etc., and is commercially available, for example, by the trade name of "LUMINOVA" (Nemoto & Company Ltd.) and "KEPRUS" (Next Eye Co., Ltd.). These products have an absorption spectrum whose peak is at 360 nm, and thus can be given sufficient light emission energy by a fluorescent lamp or a xenon lamp. Usually, the products are in the form of powder having a particle diameter of 20 to 50 µm obtainable by grinding a sintered block, but a material crushed but not ground, having a slightly greater diameter than those of ground material can also be used.

The performances of some of the commercially available products mentioned above tend to fall largely on absorbing moisture, and, therefore, they are preferably enclosed in the base having transparency to ultraviolet rays, such as glass or polycarbonate, so that they will not come into direct contact with the fluid.

"LUMINOVA", for example, is capable of continuously emitting light for 1000 minutes after being irradiated with ultraviolet rays for 4 to 5 minutes, though the intensity of the emitted light gradually diminishes. The light thus output has a wavelength peak in the vicinity of 440 to 530 nm, but includes also a wavelength region in which ordinary optical semiconductors can be excited.

The function of the spontaneous emission-type ultraviolet radiating material is made available by utilizing the decay of radium or promethium; presently used particles are obtained by re-crushing of once solidified refined powder of rocks containing such a substance.

To obtain a base having the light storage-type ultraviolet radiating material or the spontaneous emission-type ultraviolet radiating material incorporated therein, the ultraviolet radiating material may be mixed in an ultraviolet ray transmitting material so that the mixture can be formed into the shape of the base, or a hollow base may be used so that the ultraviolet radiating material can be enclosed in the internal space of the base in airtight and watertight fashion, or a sheet member having a layer of the light storage-type ultraviolet radiating material thereon may be affixed to the inner surface of the base. Such a sheet member having a layer of a light storage-type ultraviolet radiating material thereon is disclosed in Unexamined Japanese Patent Publication No. 7-199844 etc. as a luminous sheet for emitting light of fluorescent color.

When mixing the light storage-type ultraviolet radiating material or the spontaneous emission-type ultraviolet radiating material in the base, the ultraviolet radiating material may be directly mixed in the material of the base, or after the ultraviolet radiating material is filled or mixed in glass bead balloons or epoxy resin balls serving as a resin-reinforcing filler, the balloons or balls may be distributed in the material of the base. Where bead balloons are used, it is possible to adjust the buoyancy of the base.

When the light storage-type ultraviolet radiating material or the spontaneous emission-type ultraviolet radiating material is mixed in the base made of a polymeric organic substance, the material of the base may change in color or be deteriorated under the influence of ultraviolet rays emitted by the light storage-type or spontaneous emission-type ultraviolet radiating material. Therefore, an ultraviolet ray absorbing material such as 2-hydroxybenzophenone-based additive, triazole-based additive or the like is admixed to thereby cut off ultraviolet radiation with a wavelength region other than that required to activate the photocatalytic functional layer on the surface of the base.

An antioxidant or an antistatic agent may be added to the material of the base, and in this case decomposition deposits produced as a result of the decomposition of organic compounds by the photocatalytic function can be easily removed from the surface of the floating/sinking body.

In the case where the base 12 contains the light storage-type ultraviolet radiating material therein, the through hole 13 and the windows 15 effectively function in such a manner that external ultraviolet rays admitted through the windows 15 are supplied to the light storage-type ultraviolet radiating material in the base via the inner surface of the through hole on which the photocatalytic functional layer 14 is not formed, whereby a sufficient quantity of light emission energy can be stored in the light storage-type ultraviolet radiating material.

A floating/sinking body 5 shown in FIGS. 2a and 2b comprises a base 12 in the form of a short tube, and a photocatalytic functional layer 14 formed on the surface of the base 12. The base 12 is obtained by forming polypropylene resin into a base having an outside diameter of 20 mm, a length of 50 mm and the photocatalytic functional layer 14 formed only on the outer peripheral surface thereof. A through hole 13 has opposite ends thereof serving as windows 15. This structure is advantageous in that commercially available resin beads can be directly used to form the base insofar as they are of a suitable size.

A base 12 of a floating/sinking body 5 shown in FIGS. 3a and 3b is made of transparent ABS resin admixed with a light storage-type ultraviolet radiating material. Specifically, resin powder, "LUMINOVA" (trade name) and solvent (toluene) for stirring mixed at a ratio of 10:10:4 by weight are heated and melted, and the molten mixture is formed into a ball shape.

Then, after a photocatalytic functional layer 14 is formed over the entire surface of the ball, part of the surface of the ball is scraped out, thereby forming windows 15 where the photocatalytic functional layer 14 does not exist. External ultraviolet rays introduced through the windows 15 diffuse into the interior of the ball to import light emission energy to the light storage-type ultraviolet radiating material in the base.

With this structure, a plurality of windows 15 can be formed at desired positions, and external ultraviolet rays can be efficiently admitted to the interior of the base, though consideration needs to be given to the relationship of the windows to the area of the photocatalytic functional layer 14 on the surface.

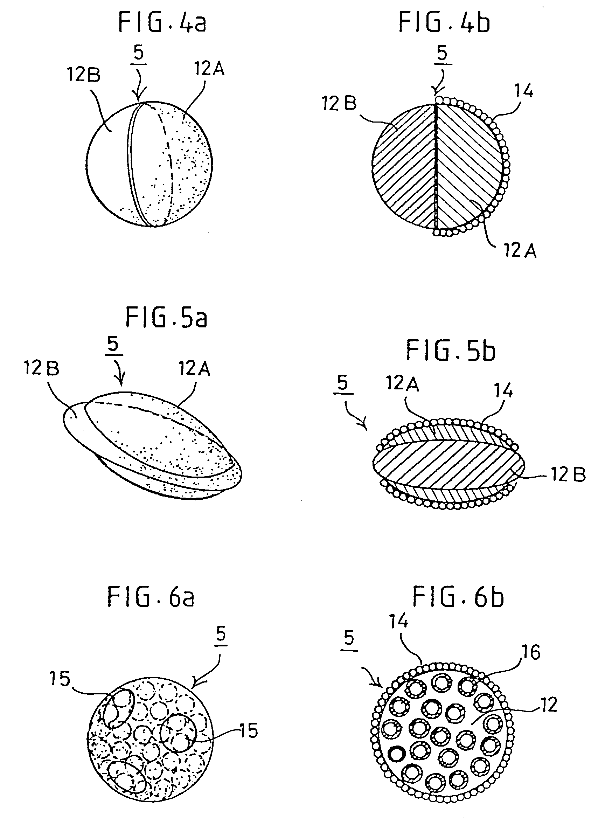

A floating/sinking body shown in FIGS. 4a and 4b is in a form of a ball obtained by joining hemispherical base members 12A and 12B together. One base member 12B is admixed with the aforementioned "LUMINOVA", while the other base member 12A is a transparent hemispherical member having nothing mixed therein and a photocatalytic functional layer 14 is formed on an outer surface (spherical surface) thereof.

The base member 12B may alternatively be admixed with a spontaneous emission-type ultraviolet radiating material, or be admixed with a mixture of light storage-type and spontaneous emission-type ultraviolet radiating materials.

With this structure, the floating/sinking body has a large portion which corresponds to the window 15 and on which the photocatalytic functional layer 14 is not formed, so that the light storage-type ultraviolet radiating material in the base member 12B can store a sufficient amount of light emission energy by absorbing ultraviolet rays from outside. At the same time, the photocatalytic functional layer 14 on the surface of the base member 12A is excited, inducing oxidation-reduction reaction. Even when the supply of ultraviolet rays from outside is cut off due to, for example, electricity failure, a relatively large amount of ultraviolet radiation is emitted from the light storage-type ultraviolet radiating material, whereby the oxidation-reduction will remain to be effective.

A floating/sinking body shown in FIGS. 5a and 5b is identical in the materials used and the production process with that shown in FIGS. 4a and 4b, but differs therefrom in that the base member 12A having the photocatalytic functional layer 14 on the surface thereof and the base member 12B admixed with the light storage-type or spontaneous emission-type ultraviolet radiating material are respectively formed in the shape of a compressed disk and are joined together so that the base member 12A will not fully cover the base member 12B.

The floating/sinking body with this structure is a small solid body having a compressed overall shape, and it rotates a number of times by itself when moving together with the fluid, thus increasing the chance of the photocatalytic functional layer 14 contacting with organic compounds or bacteria in the fluid. External ultraviolet rays are introduced into the interior of the base member 12B through the exposed outer peripheral edge (window) thereof and are absorbed by the light storage-type ultraviolet radiating material.

In the case of a floating/sinking body shown in FIGS. 6a and 6b, glass balloons 16 for buoyancy adjustment are contained in a base 12, which is obtained by forming polypropylene resin into shape, and a light storage-type ultraviolet radiating material (in this example, "LUMINOVA" is used) is mixed in the material of the glass balloons. A photocatalytic functional layer 14 (in this example, "TO SOL" is used) is formed on the outer surface (spherical surface) of the base 12 except windows 15. The windows 15 are formed by masking the base 12 when the base 12 is dipped into "TO SOL" (trade name).

In order to adjust the buoyancy of the base, an inorganic foaming agent that expands when pressure or heat is applied, or an organic foaming agent such as benzenesulfohydrazine-based or azonitrile-based compound may be used, besides the glass balloons.

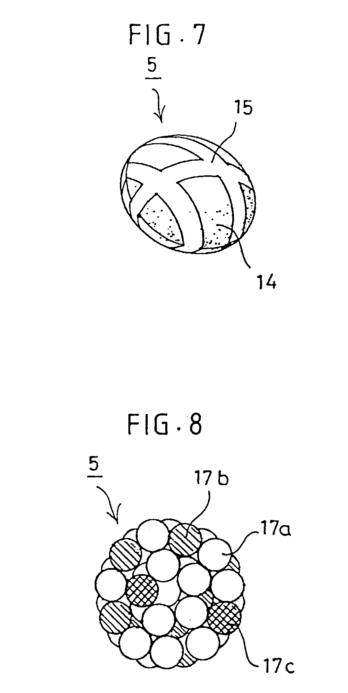

FIG. 7 shows another example of a window pattern formed by means of masking, and, as illustrated, a grid-like window may also be formed. With the grid-like window, external ultraviolet rays are apt to uniformly diffuse into the base.

A floating/sinking body 5 shown in FIG. 8 is obtained by first preparing photocatalytic spherical elements 17a, each having a photocatalytic functional layer 14 formed on the surface of a base obtained by forming polypropylene resin into shape, light-storage spherical elements 17b made of polypropylene resin admixed with a light storage-type ultraviolet radiating material, and spontaneous-emission spherical elements 17c made of polypropylene resin admixed with a spontaneous emission-type ultraviolet radiating material, then collecting these spherical elements 17a to 17c of different types, each having a diameter of about 5 mm into a ball with a diameter of about 50 mm, and finally bonding the ball-shaped mass of spherical elements together by a water-resistant adhesive.

In the floating/sinking body with this structure, since the spherical elements 17a to 17c of different types are formed separately, the temperature condition and like conditions applied when forming the photocatalytic functional layer 14 or mixing the light storage-type or spontaneous emission-type ultraviolet radiating material in the base can be set independently of one another; therefore, the production of the spherical elements is relatively easy and the performances of the individual spherical elements will not be affected from others.

Next, a purifying apparatus using the floating/sinking bodies described above will be explained.

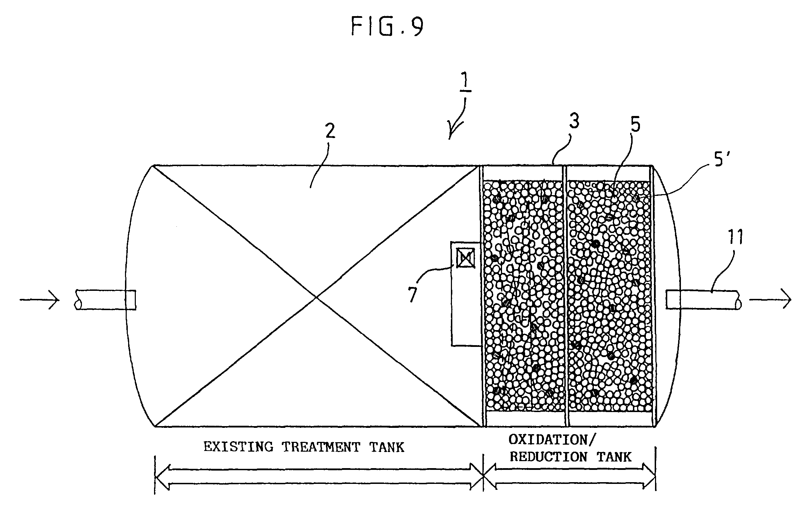

A purifying apparatus 1 shown in FIG. 9 comprises an existing treatment tank 2 and an oxidation-reduction tank 3 located on the downstream side of the tank 2.

The treatment tank 2 is the place where solid-liquid separation utilizing precipitation and exposure to air is performed and has a structure similar to that of conventional apparatus. The oxidation-reduction tank 3 (fluid tank) has its interior divided into a plurality of sections communicating with each other (FIG. 2), each section being provided with agitating blades 4 (circulating device) and containing a large number of floating/sinking bodies 5, and being provided with a fluorescent lamp 6 (an ultraviolet radiating device of an external-excitation type) arranged in an upper space thereof.

The oxidation-reduction tank 3 contains, in addition to the floating/sinking bodies 5, a large number of ultraviolet supply bodies 5', which are made of an ultraviolet ray transmitting material admixed with a light storage-type ultraviolet radiating material and/or a spontaneous emission-type ultraviolet radiating material and have an ultraviolet supplying function only.

Reference numeral 8 denotes a reflecting plate (made of stainless steel) for the fluorescent lamp 6, and 9 denotes a motor for driving the agitating blades 4 (also made of stainless steel). Reference numeral 10 represents a check valve arranged in a discharge pipe 11.

Sewage, separated into the solid and liquid and fed to the oxidation-reduction tank 3 from the treatment tank 2 by a lift pump, comes into contact with the floating/sinking bodies 5 while being circulated through the partition walls of the tank 3 by means of the agitating blades 4. The rate of circulation is approximately 0.01 to 0.3 m/second, but, as the liquid moves, the floating/sinking bodies 5 and the ultraviolet supply bodies 5' also move while turning by themselves and relative to one another and mixing with one another.

When the thus-circulating floating/sinking bodies 5 and ultraviolet supply bodies 5' move to the upper portion of the oxidation-reduction tank 3 to reach the surface of the liquid, they receive ultraviolet rays from the fluorescent lamp 6. At this time, the photocatalytic functional layers 14 of the individual floating/sinking bodies 5 are intensely excited, causing the ultraviolet supply bodies 5' containing the light storage-type ultraviolet radiating material to store light emission energy therein.

Ultraviolet rays from the fluorescent lamp 6 also diffuse downward past the liquid surface, so that the photocatalytic functional layers 14 of the floating/sinking bodies 5 are excited also while the bodies 5 are circulating within the liquid. Further, the ultraviolet supply bodies 5', which contain the light storage-type ultraviolet radiating material, emit light by releasing the energy stored in the ultraviolet radiating material to irradiate the floating/sinking bodies 5 with ultraviolet rays. Also, the ultraviolet supply bodies 5', which contain the spontaneous emission-type ultraviolet radiating material, emit light by themselves by consuming the internal energy to irradiate the floating/sinking bodies 5 with ultraviolet rays.

On contact with the photocatalytic functional layers 14 of the floating/sinking bodies 5, organic compounds in the liquid are decomposed due to oxidation-reduction reaction and also bacteria in the liquid are destroyed, whereby the liquid is purified. The degree of purification effect attained by transient oxidation-reduction reaction is small, but, since the liquid is continuously circulated with a large number of floating/sinking bodies 5 suspended therein, eventually high purification effect can be achieved.

The fluid in one section of the oxidation-reduction tank 3 is circulated within the section four to five times, then flows by degrees over to the next section to be circulated therein, and is finally discharged from the discharge pipe 11. In some cases, however, the fluid is subjected to pH adjustment and additional sterilization before discharge.

In the purifying apparatus described above, the ultraviolet radiation source, such as the fluorescent lamp 6 arranged in the upper space of the oxidation-reduction tank 3, can be easily replaced with a new one.

The circulating device may be of a vertical axial swirl flow, a horizontal axial swirl flow or a swinging flow, and various other types, not limited to rotation of blade-wheels, such as a helical feed type or a piston feed type, may also be used.

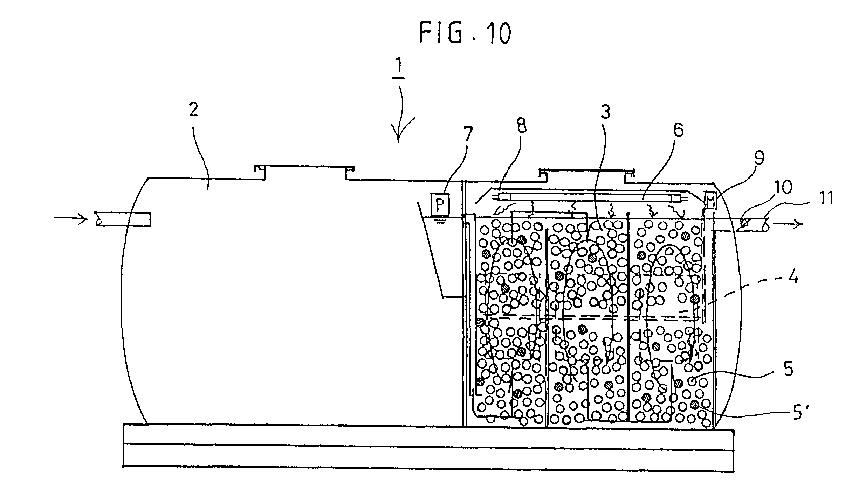

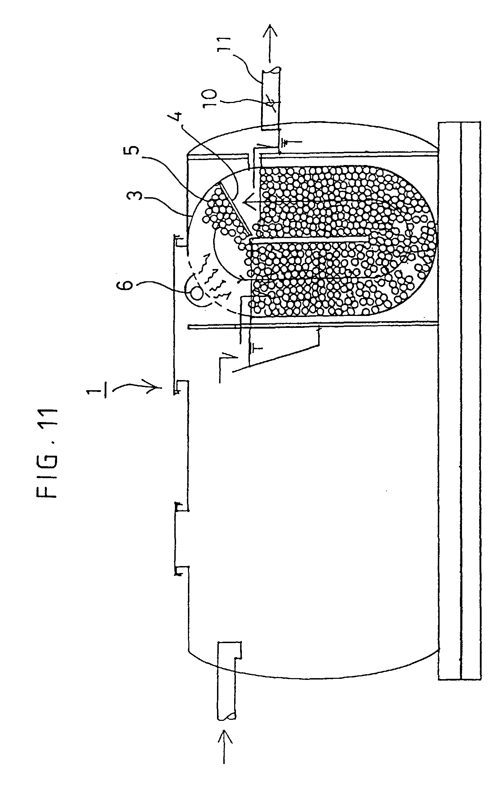

In a purifying apparatus shown in FIG. 11, an oxidation-reduction tank 3 has an elliptic circulation path therein and an agitating blade 4 slowly moving along the circulation path. A large number of floating/sinking bodies 5 contained in the tank 3 are dipped up from the liquid by the agitating blade 4. In this case, the density of the floating/sinking bodies 5 in the tank 3 is higher than that in the case of the embodiment shown in FIGS. 9 and 10.

The agitating blade 4 is made of stainless steel and takes the form of a net or has a large number of holes therein so that it will not scoop up the liquid. Further, the elliptic oxidation-reduction tank 3 has an upper space defined in the interior thereof, and a fluorescent lamp 6 is installed in this space so as to face the floating/sinking bodies 5 to be scooped up by the agitating blade 4.

With this arrangement, the agitating blade 4 is designed force the floating/sinking bodies 5 to move rather than to circulate the fluid in the tank 3, so that when layers or clusters of the floating/sinking bodies 5 are force by the agitating blade 4, the liquid is made pass through the bodies, thus greatly increasing the chance of the photocatalytic functional layers contacting with organic compounds in the liquid.

Further, as the agitating blade 4 moves into the upper space of the tank 3, the clustered floating/sinking bodies 5 are raised up in the space and then collapse. At this time, decomposition products adhering to the surfaces of the photocatalytic functional layers are removed as the floating/sinking bodies rub against one another, and also the bodies are irradiated directly (not through the medium of the liquid) with ultraviolet rays from the fluorescent lamp 6. Consequently, the oxidation-reduction effect of the photocatalytic functional layers 14 is intensified.

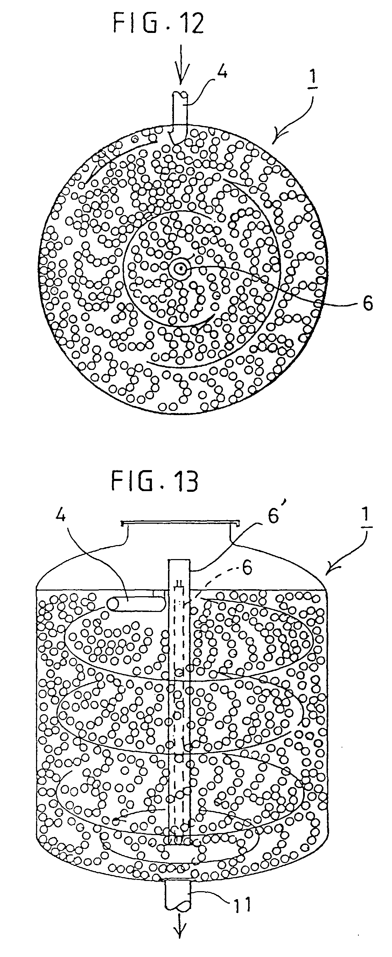

FIG. 12 illustrates a purifying apparatus applied to an elevated service water tank 1, and a large number of bodies 5 are put into the interior of the elevated water tank 1. In this example, the circulating device is implemented by an inlet pipe 4 arranged at an upper portion of the water tank 1 for spouting out service water into the tank 1. The inlet pipe 4 is arranged so that an open end portion thereof is directed along the cylindrical wall of the tank 1. The introduced service water is discharged from a discharge pipe 11 arranged at a lower portion of the tank 1. Also, at the center of the tank 1 is arranged a fluorescent lamp 6 which is enclosed in an airtight and watertight cylindrical cover 6'. The fluorescent lamp 6 may be a so-called black-light lamp which emits ultraviolet rays only to suppress propagation of green algae.

When the level of the service water in the elevated water tank 1 becomes low, a water supply mechanism known in the art operates to supply water via the inlet pipe 4. In this case, since the open end portion of the inlet pipe 4 is directed along the cylindrical wall of the tank 1, the introduced water flows from the top of downward swirling along the inside the tank 1. A large number of floating/sinking bodies 5 are forced to flow whirling and to circulate around while rotating violently by themselves, and the photocatalytic functional layers 14 thereof come into contact with organic compounds or bacteria in the water, thus performing an oxidative destruction function as well as a sterilizing function.

Since the floating/sinking bodies move up and down or spirally in the fluid while being agitated together with the fluid, they rotate not only by themselves individually but also as a whole, so that the chance of the bodies contacting with organic compounds or bacteria in the fluid is largely increased. Further, since the entire surface of each body, as a spherical solid, can fully be used, a large total area of the photocatalytic functional layers that is constantly active is available, thereby rendering a high level of the oxidation-reduction effect.

Further, the bodies are circulated together with the fluid; therefore, even with the ultraviolet radiation source arranged at a fixed position, ultraviolet rays can be supplied uniformly and sufficiently to all photocatalytic functional layers, thereby producing uniform oxidative destruction effect. Furthermore, since it is not necessary to place the ultraviolet radiation source within the fluid, the structure for protecting of the ultraviolet radiation source from the fluid can be made simple.

While circulating within the fluid tank, the bodies come into contact and rub against one another by their surfaces; therefore, decomposition products produced due to the photocatalytic function and still adhering to the surfaces of the bodies can be removed by the rubbing, so that the photocatalytic functional layers are cleaned at all times.

Further, in the case where the ultraviolet radiation source is installed in the upper space of the fluid tank so that, when the bodies have moved close to the uppermost level, they may be exposed above the surface of the fluid by the circulating device, the photocatalytic functional layers of the bodies receive ultraviolet rays directly from the ultraviolet radiation source, causing the photocatalytic function to be enhanced. In addition, higher cleaning effect can be obtained for the photocatalytic functional layers by the aforementioned rubbing while the bodies are exposed above the surface of the fluid.

When the bodies containing the light storage-type ultraviolet radiating material in their base are used, the light storage-type ultraviolet radiating material absorbs ultraviolet rays and stores light emission energy therein while ordinary purification is performed with ultraviolet rays supplied from the ultraviolet radiating device of an external-excitation type. Therefore, the photocatalytic functional layers on the surfaces of the bases can be excited by light emitted from the light storage-type ultraviolet radiating material even during electricity failure or after the ultraviolet radiating device is turned off, whereby the photocatalytic function is maintained. In such a situation the photocatalytic function gradually lowers, but it can be maintained until the ultraviolet radiation source is turned on next time.

Such function of the light storage-type ultraviolet radiating material serves to supply ultraviolet rays to the photocatalyst to maintain its photocatalytic function during a period of time in which the bodies are away from the ultraviolet radiation source (an ultraviolet radiating device of an external-excitation type, lighting window, etc.) and thus are unable to receive sufficient ultraviolet rays.

If, in this case, the bodies have windows, not provided with the photocatalytic functional layer formed on their surface, ultraviolet rays reach the light storage-type ultraviolet radiating material without being weakened by the photocatalytic functional layer, so that the light storage-type ultraviolet radiating material can be given sufficient energy for light emission.

In the case of the bodies containing the spontaneous emission-type ultraviolet radiating material in their base, not only a function similar to that available in the case where the light storage-type ultraviolet radiating material is contained in the bases can be obtained but also ultraviolet rays can always be supplied from inside to the photocatalytic functional layers on the surfaces of the bases, thus assisting excitation of the photocatalytic functional layers by means of the ultraviolet radiating device of an external-excitation type.

The foregoing explanation is focused mainly on the oxidation-reduction tank 3 of the sewage purifying apparatus 1, but it is to be noted that the technical concept of the present invention can be applied also to apparatus for purifying the waters of rivers, lakes and marshes.

Further, the above description is concerned with the liquid as an example of fluid, but the gas as a form of fluid can also be purified by this invention. In such a case, each floating/sinking body is made using a base 12 having a large hollow therein like a balloon, thereby making the apparent specific gravity smaller.

The size, shape the material of the base, etc. the floating/sinking bodies to be put into the fluid tank are determined in accordance with the intended use. Further, floating/sinking bodies of different sizes may be mixed for use.

If a photocatalytic layer is formed on the inner wall surfaces of the fluid tank too, the level of the oxidation-reduction effect on the fluid can be enhanced.

Since the floating/sinking bodies, each being a small solid body, circulate within the fluid tank rotating individually and as a whole, there are a great number of chances for the photocatalytic functional layers on the surfaces of the bodies to contact with organic compounds or bacteria in the fluid, thus facilitating decomposition or destruction of organic matter by means of the oxidation-reduction reaction.

Most of the floating/sinking bodies circulate as the fluid moves, and, therefore, no special motive power is needed to move the floating/sinking bodies. Also, the residual decomposition products adhering to the surfaces of the floating/sinking bodies are rubbed off when the bodies contact with one another, and thus the photocatalytic functional layers are cleaned at all times, preventing the floating/sinking bodies from being deteriorated too early.

The floating/sinking bodies are subject to wear and decomposition products cannot be completely removed by the rubbing and some remain on the surfaces of the bodies; therefore, it is necessary for the floating/sinking bodies to be replaced periodically or be cleaned completely. On such occasions, the floating/sinking bodies, each being a small solid body, can be collected by being simply scooped out of the fluid tank, thereby making maintenance and inspection work easier.

With the floating/sinking bodies obtained by mixing the light storage-type ultraviolet radiating material or the spontaneous emission-type ultraviolet radiating material in the bases thereof, the photocatalytic functional layers on the surfaces of the bodies are continuously activated and the progress of purification process is not interrupted even during electricity failure, or after the ultraviolet radiating device is turned off, or while the bodies are moving with the fluid in an area where ultraviolet rays from the ultraviolet radiation source scarcely reach.

Further, the light storage-type ultraviolet radiating material in the floating/sinking bodies has an ultraviolet-ray-carrying function for enabling it to absorb the ultraviolet rays radiated from the ultraviolet radiation source at a predetermined location and released it at a different location, thus allowing a high degree of freedom in respect of the location of the ultraviolet radiation source. This is convenient in the cases where the sunlight, with which the direction and location for letting the light in are limited, is used as the ultraviolet radiation source.

With the floating/sinking bodies provided with the windows, external ultraviolet rays are introduced to the light storage-type ultraviolet radiating material without being hindered by the photocatalytic functional layers, so that the intensity of light emitted from the light storage-type ultraviolet radiating material is enhanced, enabling the photocatalytic functional layers to be activated at a high level.

## Claims

1. A floating/sinking body movable in a fluid for purifying the fluid, comprising:
a solid base made of an ultraviolet ray transmitting material to sink and float in the fluid; and
a photocatalytic functional layer formed on an outer surface of said base.

2. A floating/sinking body according to claim 1, wherein said base has a spherical shape with a through hole.

3. A floating/sinking body according to claim 1, wherein said base has a short tubular shape.

4. A floating/sinking body movable in a fluid for purifying the fluid, comprising:
a solid base made of an ultraviolet ray transmitting material with an ultraviolet radiating material of a light storage type and/or an ultraviolet radiating material of a spontaneous emission type, so as to sink and float in the fluid; and
a photocatalytic functional layer formed on an outer surface of said base.

5. A floating/sinking body movable in a fluid for purifying the fluid, comprising:
a solid base made of an ultraviolet ray transmitting material and an ultraviolet radiating material of a light storage-type, so as to sink and float in the fluid;
a photocatalytic functional layer formed on an outer surface of said base; and
a window with no photocatalytic functional layer, formed on the outer surface of said base.

6. A floating/sinking body movable in a fluid for purifying the fluid, comprising:
a first member having a photocatalytic functional layer on a surface thereof; and
a second member made of an ultraviolet ray transmitting material with an ultraviolet radiating material of a light storage-type and/or an ultraviolet radiating material of a spontaneous emission-type,
said first and second members being joined together so that said second member is not entirely covered by said first member.

7. A floating/sinking body movable in a fluid for purifying the fluid, comprising:
a plurality of first solid particles each having a photocatalytic functional layer on a surface thereof; and
a plurality of second solid particles made of an ultraviolet ray transmitting material with an ultraviolet radiating material of a light storage-type and/or an ultraviolet radiating material of a spontaneous emission-type,
said first solid particles and said second solid particles being collected and joined together.

8. A purifying apparatus comprising:
a fluid tank for containing a fluid to be purified;
floating/sinking bodies movable in the fluid in said fluid tank;
an ultraviolet radiation source for radiating ultraviolet rays to said floating/sinking bodies; and
a circulation device for circulating said floating/sinking bodies to move up and down for exposing said floating/sinking bodies to the ultraviolet rays from said ultraviolet radiation source.

9. A purifying apparatus according to claim 8, wherein each of said floating/sinking bodies comprises a solid base made of an ultraviolet ray transmitting material to sink and float in the fluid, and a photocatalytic functional layer formed on an outer surface of said base.

10. A purifying apparatus according to claim 9, wherein said base has a spherical shape with a through hole.

11. A purifying apparatus according to claim 9, wherein said base has a short tubular shape.

12. A purifying apparatus according to claim 8, wherein each of said floating/sinking bodies comprises: a solid base made of an ultraviolet ray transmitting material with an ultraviolet radiating material of a light storage type and/or an ultraviolet radiating material of a spontaneous emission type, so as to sink and float in the fluid; and a photocatalytic functional layer formed on an outer surface of said base.

13. A purifying apparatus according to claim 8, wherein each of said floating/sinking bodies comprises: a solid base made of an ultraviolet ray transmitting material and an ultraviolet radiating material of a light storage-type, so as to sink and float in the fluid; a photocatalytic functional layer formed on an outer surface of said base; and a window with no photocatalytic functional layer, formed on the outer surface of said base.

14. A purifying apparatus according to claim 8, wherein each of said floating/sinking bodies comprises: a first member having a photocatalytic functional layer on a surface thereof; and a second member made of an ultraviolet ray transmitting material with an ultraviolet radiating material of a light storage-type and/or an ultraviolet radiating material of a spontaneous emission-type, said first and second members being joined together so that said second member is not entirely covered by said first member.

15. A purifying apparatus according to claim 8, wherein each of said floating/sinking bodies is formed by collecting and joining a plurality of first solid particles each having a photocatalytic functional layer on a surface thereof, and a plurality of second solid particles made of an ultraviolet ray transmitting material with an ultraviolet radiating material of a light storage-type and/or an ultraviolet radiating material of a spontaneous emission-type.

16. A purifying apparatus comprising:
a fluid tank containing a fluid to be purified;
floating/sinking bodies for purification, movable in the fluid in said fluid tank and having a photocatalytic functional layer on a surface thereof;
floating/sinking bodies for supplying ultraviolet rays, movable in the fluid in said fluid tank and made of an ultraviolet ray transmitting material with an ultraviolet radiating material of a light storage type and/or an ultraviolet radiating material of a spontaneous emission type, to have an ultraviolet ray supplying function only;
an ultraviolet radiation source for radiating ultraviolet rays to said floating/sinking bodies for purification and said floating/sinking bodies for supplying ultraviolet rays; and
a circulation device for circulating said floating/sinking bodies for purification and said floating/sinking bodies for supplying ultraviolet rays to move up and down in said fluid tank for exposing said floating/sinking bodies to the ultraviolet rays from said ultraviolet radiation source.

17. A purifying apparatus according to claim 16, wherein each of said floating/sinking bodies for purification comprises a solid base made of an ultraviolet ray transmitting material to sink and float in the fluid, and a photocatalytic functional layer formed on an outer surface of said base.

18. A purifying apparatus according to claim 17, wherein said base has a spherical shape with a through hole.

19. A purifying apparatus according to claim 17, wherein said base has a short tubular shape.

20. A purifying apparatus according to claim 16, wherein each of said floating/sinking bodies for purification comprises: a solid base made of an ultraviolet ray transmitting material with an ultraviolet radiating material of a light storage type and/or an ultraviolet radiating material of a spontaneous emission type, so as to sink and float in the fluid; and a photocatalytic functional layer formed on an outer surface of said base.

21. A purifying apparatus according to claim 16, wherein each of said floating/sinking bodies for purification comprises: a solid base made of an ultraviolet ray transmitting material and an ultraviolet radiating material of a light storage-type, so as to sink and float in the fluid; a photocatalytic functional layer formed on an outer surface of said base; and a window with no photocatalytic functional layer, formed on the outer surface of said base.

22. A purifying apparatus according to claim 16, wherein each of said floating/sinking bodies for purification comprises: a first member made of an ultraviolet ray transmitting material and having a photocatalytic functional layer on a surface thereof; and a second member made of an ultraviolet ray transmitting material with an ultraviolet radiating material of a light storage-type and/or an ultraviolet radiating material of a spontaneous emission-type, said first and second members being joined together so that said second member is not entirely covered by said first member.

23. A purifying apparatus according to claim 16, wherein each of said floating/sinking bodies is obtained by collecting and joining a plurality of first solid particles each having a photocatalytic functional layer on a surface thereof; and a plurality of second solid particles made of an ultraviolet ray transmitting material with an ultraviolet radiating material of a light storage-type and/or an ultraviolet radiating material of a spontaneous emission-type.

24. A purifying apparatus according to claim 16, wherein said ultraviolet-ray radiation source is disposed at an upper portion of said fluid tank, and said circulation device raises said floating/sinking bodies for purification and floating/sinking bodies for supplying ultraviolet rays above a surface of the fluid.

25. A purifying apparatus according to claim 16, wherein said circulation device includes a jet pipe for spouting fluid into said fluid tank.
